# EUROPEAN PATENT APPLICATION

(11) **EP 4 411 888 A1**
(43) Date of publication of application: **07.08.2024**
(21) Application number: 22875912.2
(22) Date of filing: 20.09.2022
(51) Int. Cl.: H01M 4/525, H01M 4/36, H01M 4/505

(54) **POSITIVE ELECTRODE ACTIVE MATERIAL FOR NON-AQUEOUS ELECTROLYTE SECONDARY BATTERIES, AND NON-AQUEOUS ELECTROLYTE SECONDARY BATTERY**

(30) Priority: 30.09.2021 JP 2021160427
(71) Applicant: Panasonic Intellectual Property Management Co., Ltd., Osaka-shi, Osaka 540-6207 (JP)
(72) Inventor: FUJITANI, Naoya, Kadoma-shi, Osaka 571-0057 (JP); AOKI, Yoshinori, Kadoma-shi, Osaka 571-0057 (JP); OGASAWARA, Takeshi, Kadoma-shi, Osaka 571-0057 (JP)
(74) Representative: Novagraaf International SA
(86) International application number: PCT/JP2022/034891
(87) International publication number: WO 2023/054041

(57) **Abstract**

A positive electrode active material for non-aqueous electrolyte secondary batteries according to one example of an embodiment of the present invention has a layered structure and comprises a lithium transition metal composite oxide represented by general formula LiₓNiₐMn_{b}Al_{c}Co_{d}MₑO_{2-y} (in the formula, 0.95<x<1.05, 0.75≤a≤0.95, 0.05≤b≤0.25, 0≤c≤0.02, 0≤d<0.05, 0≤e≤0.03, 0≤y≤0.05, and a+b+c=1 are satisfied, and M represents at least one element selected from Fe, Ti, Si, Nb, Mo, W, and Zr). A compound, which contains at least one element selected from Ca and Sr and at least one element selected from W, Mo, Ti, and Zr, adheres to an interface between primary particles inside secondary particles of the lithium transition metal composite oxide.

## Description

### TECHNICAL FIELD

The present disclosure relates to a positive electrode active material for a non-aqueous electrolyte secondary battery, and a non-aqueous electrolyte secondary battery using the active material.

### BACKGROUND ART

A positive electrode active material to constitute a positive electrode of a non-aqueous electrolyte secondary battery significantly affects battery performance such as a capacity and cycle characteristics, and thereby many investigations have been made on the positive electrode active material. For example, Patent Literature 1 discloses a positive electrode active material in which an alkali earth metal and W are present on surfaces of secondary particles of a lithium-transition metal composite oxide including one or more selected from Mn, Ni, and Co as a transition metal element. Patent Literature 2 discloses a positive electrode active material including a lithium-transition metal composite oxide including one or more selected from Mn, Ni, and Co as a transition metal element, in which Ca and W form a solid solution.

### CITATION LIST

### PATENT LITERATURE

PATENT LITERATURE 1: Japanese Unexamined Patent Application Publication No. 2018-129221
PATENT LITERATURE 2: International Publication No. WO 2012/035664

### SUMMARY

### TECHNICAL PROBLEM

Although a lithium-transition metal composite oxide with a high Ni content is known as a positive electrode active material with a high capacity, much Ni⁴⁺, which has high reactivity is present in a surface layer of particles of the composite oxide in a state of high charge rate, and thereby side reactions with an electrolyte liquid easily occur. Accordingly, a decomposed product generated with the side reactions is deposited on the particle surfaces of the composite oxide to increase reaction resistance of a positive electrode.

It is an advantage of the present disclosure to inhibit the increase in reaction resistance in a positive electrode of a non-aqueous electrolyte secondary battery using a positive electrode active material with a high Ni content.

### SOLUTION TO PROBLEM

A positive electrode active material for a non-aqueous electrolyte secondary battery according to the present disclosure includes a lithium-transition metal composite oxide having a layered structure and represented by the general formula LiₓNiₐMn_{b}Al_{c}Co_{d}MₑO_{2-y}, wherein 0.95<x<1.05, 0.75≤a≤0.95, 0.05≤b≤0.25, 0≤c≤0.02, 0≤d<0.05, 0≤e≤0.03, 0≤y≤0.05, a+b+c=1, and M represents at least one element selected from the group consisting of Fe, Ti, Si, Nb, Mo, W, and Zr, wherein the lithium-transition metal composite oxide is of secondary particles formed by aggregation of primary particles, and a compound containing: at least one selected from the group consisting of Ca and Sr; and at least one selected from the group consisting of W, Mo, Ti, and Zr adheres to at least an interface between the primary particles inside the secondary particles.

A non-aqueous electrolyte secondary battery according to the present disclosure comprises: a positive electrode including the above positive electrode active material; a negative electrode; and a non-aqueous electrolyte.

### ADVANTAGEOUS EFFECT OF INVENTION

According to the positive electrode active material of the present disclosure, the side reactions with the electrolyte liquid may be effectively inhibited to reduce the reaction resistance in the positive electrode for a non-aqueous electrolyte secondary battery using the positive electrode active material with a high Ni content.

### BRIEF DESCRIPTION OF DRAWING

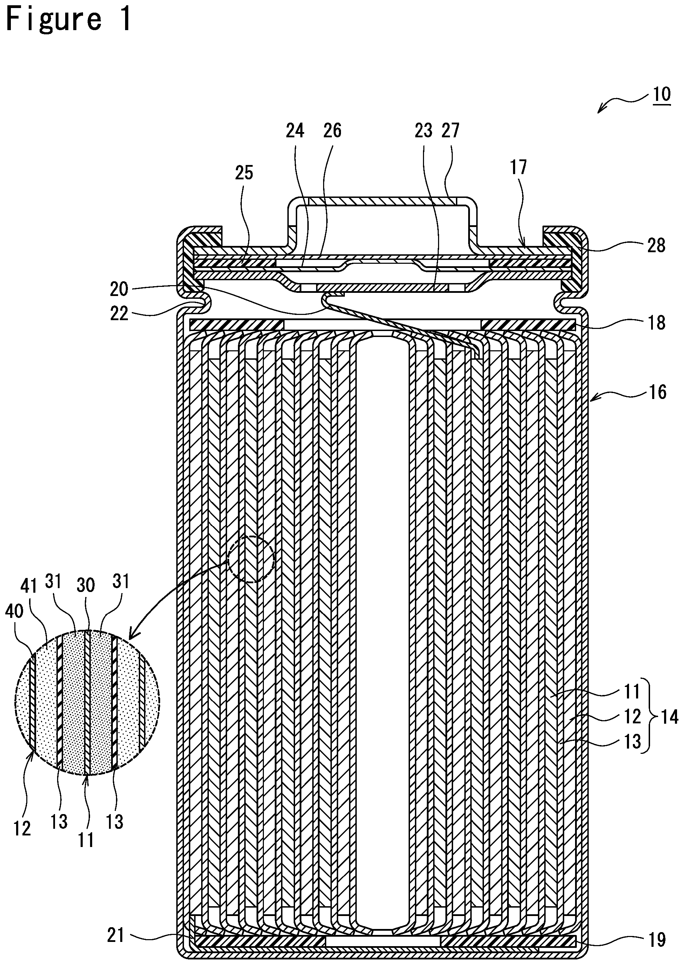

FIG. 1 is a sectional view of a non-aqueous electrolyte secondary battery of an embodiment example.

### DESCRIPTION OF EMBODIMENTS

In a lithium-transition metal composite oxide with a high Ni content and a high capacity, the present inventors have found that the increase in the reaction resistance may be specifically inhibited by adhering a compound containing: at least one selected from the group consisting of Ca and Sr; and at least one selected from the group consisting of W, Mo, Ti, and Zr to an interface between primary particles inside secondary particles of the composite oxide. The lithium-transition metal composite oxide with a high Ni content is likely to cause the side reactions with the electrolyte liquid particularly in a state of a high charge rate as noted above. However, when the above compound is present on the interface between the primary particles, it is considered that the particle surfaces are protected to effectively inhibit the side reactions with the electrolyte liquid.

The compound may be present on surfaces of the secondary particles, but if the compound is present only on the surfaces of the secondary particles and absent on the surfaces of the primary particles inside the secondary particles as in Comparative Example 4 described later, the effect of inhibiting the reaction resistance cannot be obtained.

Hereinafter, an embodiment example of the positive electrode active material for a non-aqueous electrolyte secondary battery according to the present disclosure and a non-aqueous electrolyte secondary battery using the active material will be described in detail with reference to the drawing. The scope of the present disclosure includes selective combinations of constitutional elements of a plurality of embodiments and modified examples described below.

Hereinafter, a cylindrical battery in which a wound electrode assembly 14 is housed in a bottomed cylindrical exterior housing can 16 will be exemplified, but the exterior is not limited to a cylindrical exterior housing can, and may be, for example, a rectangular exterior housing can (rectangular battery), a coin-shaped exterior housing can (coin battery), or an exterior constituted of laminated sheets including a metal layer and a resin layer (laminate battery). The electrode assembly is not limited to a wound electrode assembly, and may be a stacked electrode assembly in which a plurality of positive electrodes and a plurality of negative electrodes are alternately stacked via a separator.

FIG. 1 is a sectional view of a non-aqueous electrolyte secondary battery 10 of an embodiment example. As illustrated in FIG. 1, the non-aqueous electrolyte secondary battery 10 comprises the wound electrode assembly 14, a non-aqueous electrolyte, and the exterior housing can 16 housing the electrode assembly 14 and the non-aqueous electrolyte. The electrode assembly 14 has a positive electrode 11, a negative electrode 12, and a separator 13, and has a wound structure in which the positive electrode 11 and the negative electrode 12 are spirally wound via the separator 13. The exterior housing can 16 is a bottomed cylindrical metallic container having an opening on one side in an axial direction, and the opening of the exterior housing can 16 is sealed with a sealing assembly 17. Hereinafter, for convenience of description, the sealing assembly 17 side of the battery will be described as the upper side, and the bottom side of the exterior housing can 16 will be described as the lower side.

The non-aqueous electrolyte includes a non-aqueous solvent and an electrolyte salt dissolved in the non-aqueous solvent. For the non-aqueous solvent, esters, ethers, nitriles, amides, and a mixed solvent of two or more thereof, and the like are used, for example. The non-aqueous solvent may contain a halogen-substituted derivative in which hydrogen of these solvents is at least partially substituted with a halogen atom such as fluorine. An example of the non-aqueous solvent is ethylene carbonate (EC), ethyl methyl carbonate (EMC), dimethyl carbonate (DMC), a mixed solvent thereof, or the like. For the electrolyte salt, a lithium salt such as LiPF₆ is used, for example. The non-aqueous electrolyte is not limited to a liquid electrolyte, and may be a solid electrolyte.

The positive electrode 11, the negative electrode 12, and the separator 13, which constitute the electrode assembly 14, are all a band-shaped elongated body, and spirally wound to be alternately stacked in a radial direction of the electrode assembly 14. To prevent precipitation of lithium, the negative electrode 12 is formed to be one size larger than the positive electrode 11. That is, the negative electrode 12 is formed to be longer than the positive electrode 11 in a longitudinal direction and a width direction (short direction). The separators 13 are formed to be one size larger than at least the positive electrode 11, and two of them are disposed so as to sandwich the positive electrode 11, for example. The electrode assembly 14 has a positive electrode lead 20 connected to the positive electrode 11 by welding or the like and a negative electrode lead 21 connected to the negative electrode 12 by welding or the like.

Insulating plates 18 and 19 are disposed on the upper and lower sides of the electrode assembly 14, respectively. In the example illustrated in FIG. 1, the positive electrode lead 20 extends through a through hole of the insulating plate 18 toward the sealing assembly 17 side, and the negative electrode lead 21 extends through the outside of the insulating plate 19 toward the bottom side of the exterior housing can 16. The positive electrode lead 20 is connected to a lower surface of an internal terminal plate 23 of the sealing assembly 17 by welding or the like, and a cap 27, which is a top plate of the sealing assembly 17 electrically connected to the internal terminal plate 23, becomes a positive electrode terminal. The negative electrode lead 21 is connected to a bottom inner surface of the exterior housing can 16 by welding or the like, and the exterior housing can 16 becomes a negative electrode terminal.

A gasket 28 is provided between the exterior housing can 16 and the sealing assembly 17, and thereby sealing inside the battery is ensured. On the exterior housing can 16, a grooved portion 22 in which a part of a side wall thereof projects inward to support the sealing assembly 17 is formed. The grooved portion 22 is preferably formed in a circular shape along a circumferential direction of the exterior housing can 16, and supports the sealing assembly 17 with the upper face thereof. The sealing assembly 17 is fixed on the upper part of the exterior housing can 16 with the grooved portion 22 and with an end part of the opening of the exterior housing can 16 caulked to the sealing assembly 17.

The sealing assembly 17 has a stacked structure of the internal terminal plate 23, a lower vent member 24, an insulating member 25, an upper vent member 26, and the cap 27 in this order from the electrode assembly 14 side. Each member constituting the sealing assembly 17 has, for example, a disk shape or a ring shape, and each member except for the insulating member 25 is electrically connected to each other. The lower vent member 24 and the upper vent member 26 are connected at each of central parts thereof, and the insulating member 25 is interposed between each of the circumferential parts. If the internal pressure of the battery increases due to abnormal heat generation, the lower vent member 24 is deformed so as to push the upper vent member 26 up toward the cap 27 side and breaks, and thereby a current pathway between the lower vent member 24 and the upper vent member 26 is cut off. If the internal pressure further increases, the upper vent member 26 breaks, and gas is discharged through an opening of the cap 27.

Hereinafter, the positive electrode 11, the negative electrode 12, and the separator 13, which constitute the electrode assembly 14, specifically a positive electrode active material constituting the positive electrode 11, will be described in detail.

### [Positive Electrode]

The positive electrode 11 comprises a positive electrode core 30 and a positive electrode mixture layer 31 provided on a surface of the positive electrode core 30. For the positive electrode core 30, a foil of a metal stable within a potential range of the positive electrode 11, such as aluminum or an aluminum alloy, a film in which such a metal is disposed on a surface layer thereof, or the like may be used. The positive electrode mixture layer 31 includes the positive electrode active material, a binder, and a conductive agent, and is preferably provided on both surfaces of the positive electrode core 30. The positive electrode 11 may be produced by, for example, applying a slurry of a positive electrode mixture on the positive electrode core 30, and drying and subsequently compressing the coating to form the positive electrode mixture layers 31 on both the surfaces of the positive electrode core 30.

Examples of the binder included in the positive electrode mixture layer 31 include a fluororesin such as polytetrafluoroethylene (PTFE) and polyvinylidene fluoride (PVdF), polyacrylonitrile (PAN), a polyimide, an acrylic resin, and a polyolefin. With any one of these resins, a cellulose derivative such as carboxymethylcellulose (CMC) or a salt thereof, polyethylene oxide (PEO), or the like may be used in combination. A content of the binder is, for example, greater than or equal to 0.5 mass% and less than or equal to 2 mass% relative to the mass of the positive electrode mixture layer 31.

Examples of the conductive agent included in the positive electrode mixture layer 31 include carbon materials such as carbon black, acetylene black, Ketjenblack, graphite, and carbon nanotube. A content of the conductive agent is, for example, greater than or equal to 0.5 mass% and less than or equal to 10 mass% relative to the mass of the positive electrode mixture layer 31.

The positive electrode active material includes a lithium-transition metal composite oxide having a layered structure and represented by the general formula LiₓNiₐMn_{b}Al_{c}Co_{d}MₑO_{2-y}, wherein 0.95<x<1.05, 0.75≤a≤0.95, 0.05≤b≤0.25, 0≤c≤0.02, 0≤d<0.05, 0≤e≤0.03, 0≤y≤0.05, a+b+c=1, and M represents at least one element selected from the group consisting of Fe, Ti, Si, Nb, Mo, W, and Zr. Specific examples of the layered crystal structure include a layered structure belonging to a space group R-3m or a layered structure belonging to a space group C2/m.

The lithium-transition metal composite oxide is in the form of secondary particles formed by aggregation of a plurality of primary particles. A particle diameter of the primary particles is, for example, greater than or equal to 0.05 µm and less than or equal to 1 µm. The particle diameter of the primary particle is measured as a diameter of a circumscribed circle in a particle image observed with a scanning electron microscope (SEM). A compound containing: at least one selected from the group consisting of Ca and Sr; and at least one selected from the group consisting of W, Mo, Ti, and Zr adheres to an interface between the primary particles inside the secondary particles of the lithium-transition metal composite oxide.

Hereinafter, for convenience of description, the above lithium-transition metal composite oxide is referred to as "the composite oxide (Z)". The above compound is referred to as "the compound X". The positive electrode active material contains the composite oxide (Z) as a main component. Here, the main component means a component having the highest mass ratio among constitutional components of the positive electrode active material. Although the positive electrode mixture layer 31 may contain a composite oxide other than the composite oxide (Z) in combination as the positive electrode active material, a content of the composite oxide (Z) is preferably greater than or equal to 50 mass%, and may be substantially 100 mass%.

A median diameter (D50) of the composite oxide (Z) on a volumetric basis is, for example, greater than or equal to 3 µm and less than or equal to 30 µm, and preferably greater than or equal to 5 µm and less than or equal to 25 µm. Since the composite oxide (Z) is of the secondary particles formed by aggregation of the primary particles, the D50 of the composite oxide (Z) means D50 of the secondary particles. The D50 means a particle diameter at which a cumulative frequency is 50% from a smaller particle diameter side in a particle size distribution on a volumetric basis. The particle size distribution of the composite oxide (Z) may be measured by using a laser diffraction-type particle size distribution measuring device (for example, MT3000II, manufactured by MicrotracBEL Corp.) with water as a dispersion medium.

The BET specific surface area of the composite oxide (Z) is preferably greater than or equal to 0.5 m²/g and less than or equal to 3.5 m²/g. The BET specific surface area within the above range easily inhibits the reaction resistance without decrease in a discharge capacity. If the BET specific surface area is smaller than the above range, a reaction area decreases, and thereby the discharge capacity may be decreased. On the other hand, if the BET specific surface area is larger than the above range, the surface cannot be sufficiently coated only with the compound X, and thereby the effect of inhibiting the reaction resistance becomes small. The BET specific surface area is measured in accordance with the BET method (nitrogen adsorption method) described in JIS R1626.

The composite oxide (Z) contains 75 mol% of Ni relative to a total number of moles of elements excluding Li and O, as noted above. The content of Ni ("a" in the general formula) being greater than or equal to 75 mol% may yield a battery with a high energy density. An upper limit of the Ni content is preferably 95 mol%. If the Ni content is greater than 95 mol%, it is difficult to achieve stability of the layered structure of the composite oxide (Z) to deteriorate the battery performance such as the cycle characteristics. An example of a preferable range of the Ni content is greater than or equal to 80 mol% and less than or equal to 95 mol%, or greater than or equal to 85 mol% and less than or equal to 95 mol%.

The composite oxide (Z) contains greater than or equal to 5 mol% and less than or equal to 25 mol% of Mn relative to the total number of moles of elements excluding Li and O. The content of Mn ("b" in the general formula) being greater than or equal to 5 mol% stabilizes the layered structure of the composite oxide (Z) while keeping the high energy density. On the other hand, if the Mn content is greater than 25 mol%, the capacity and the cycle characteristics at high temperature are deteriorated. An example of a preferable range of the Mn content is greater than or equal to 5 mol% and less than or equal to 20 mol%.

"x" representing a proportion of Li in the composite oxide (Z) is 0.95<x<1.05, and more preferably 0.97≤a≤1.03. If "x" is less than or equal to 0.95, the capacity may be decreased compared with the case where "x" satisfies the above range. If "x" is greater than or equal to 1.05, a larger amount of Li compound is added, and thereby such addition may not be economical from the viewpoint of a manufacturing cost compared with the case where "x" satisfies the above range.

When the composite oxide (Z) contains Al, "c" representing a proportion of Al is less than or equal to 0.02. Since an oxidation number of Al does not change during charge and discharge, containing Al in the transition metal layer is considered to stabilize the structure of the transition metal layer. On the other hand, if the content of Al is excessively high, the capacity is decreased.

When the composite oxide (Z) contains Co, "d" representing a proportion of Co is less than 0.05. Since Co is an expensive element, the content of Co is preferably reduced with considering the manufacturing cost. As shown in Reference Examples described later, if the content of Co is greater than or equal to 5 mol% relative to the total number of moles of the elements excluding Li and O, the effect by the compound X of inhibiting the side reactions is deteriorated. In other words, when the content of Co is less than 5 mol%, the effect by the compound X becomes remarkable.

As noted above, the compound X containing: at least one selected from the group consisting of Ca and Sr; and at least one selected from the group consisting of W, Mo, Ti, and Zr adheres to at least the interface of the primary particles inside the secondary particles of the composite oxide (Z). When the compound X is present on the surfaces of the primary particles inside the secondary particles of the composite oxide (Z), it is considered that the side reactions between the composite oxide (Z) and the electrolyte liquid is effectively inhibited, and the reaction resistance of the positive electrode 11 may be reduced.

The presence of the compound X may be confirmed by measuring a cross section of the secondary particles by using a transmission electron microscope-energy dispersive X-ray spectrometry (TEM-EDX). The compound X may be scatteringly present on the surfaces of the primary particles, or may be present as a layer so as to widely cover the surface of the primary particles, for example.

The compound X may be further present on the surfaces of the secondary particles of the composite oxide (Z). That is, the compound X is widely present on the surfaces of the primary particles inside the secondary particles and the surfaces of the secondary particles. The secondary particles of the composite oxide (Z) are formed by, for example, aggregation of five or more of the primary particles, and a surface area inside the primary particles is larger than that on the surfaces of the secondary particles. The compound X is more included inside the secondary particles than on the surface thereof.

A total amount of Ca and Sr in the compound X is preferably less than or equal to 2 mol% relative to a total molar amount of metal elements excluding Li in the composite oxide (Z). When the total amount of Ca and Sr is less than or equal to 2 mol%, the effect of inhibiting the reaction resistance becomes more remarkable. Although the compound X may contain both elements of Ca and Sr, containing any one element of them may yield the effect of inhibiting the reaction resistance.

The compound X is preferably an oxide. An example of a preferable composition of the oxide is represented by the general formula A_{α}B_{β}O_{γ} wherein 1≤α≤2, 1≤β≤2, 3≤γ≤6, A represents at least one selected from the group consisting of Ca and Sr, and B represents at least one selected from the group consisting of W, Mo, Ti, and Zr. When the compound X is the oxide having the composition represented by the above general formula, the effect of inhibiting the reaction resistance becomes more remarkable.

Specific examples of A_{α}B_{β}O_{γ} include CaWO₄, CaMoO₃, CaMoO₄, CaTiO₃, CaZrO₃, CaZr₄O₉, SrWO₄, SrMoO₃, SrMoO₄, SrTiO₃, Sr₂TiO₄, SrZrO₃, and SrZr₄O₉.

A content of the element A in A_{α}B_{β}O_{γ} is preferably less than or equal to 2 mol% relative to a total molar amount of metal elements excluding Li in the composite oxide (Z) and A_{α}B_{β}O_{γ}, as noted above. Similarly, a content of the element B in A_{α}B_{β}O_{γ} is preferably less than or equal to 3 mol% relative to the total molar amount of metal elements excluding Li in the composite oxide (Z) and A_{α}B_{β}O_{γ}. The contents of the elements A and B in A_{α}B_{β}O_{γ} are preferably greater than or equal to 1 mol%. A part of the elements A and B added for forming A_{α}B_{β}O_{γ} may form a solid solution in the composite oxide (Z).

Hereinafter, an example of a method for manufacturing the composite oxide (Z) in which the compound X adheres to the interfaces of the primary particles will be described.

The step of manufacturing the composite oxide (Z) includes, for example: a first step of obtaining a composite oxide containing Ni and the like; a second step of mixing the composite oxide and a lithium compound to obtain a mixture; a third step of firing the mixture; and a fourth step of washing the fired product with water, and heating and drying the product. The compound X may adhere to the interfaces of the primary particles inside the secondary particles of the composite oxide (Z) by adding a compound containing the element A and a compound containing the element B in the step of manufacturing the composite oxide (Z). The compound containing the element A and the compound containing the element B are preferably added in the above second step.

In the first step, for example, while stirring a solution of metal salts containing Ni, Mn, and the like, a solution of an alkali such as sodium hydroxide is added dropwise in order to adjust a pH on the alkaline side (for example, greater than or equal to 8.5 and less than or equal to 12.5) to precipitate (coprecipitate) a composite hydroxide containing Ni, Mn, and the like. The composite hydroxide is fired to obtain a composite oxide containing Ni, Mn, and the like. The firing temperature is not particularly limited, but an example thereof is greater than or equal to 300°C and less than or equal to 600°C.

In the second step, the composite oxide obtained in the first step, the lithium compound, the compound containing the element A, and the compound containing the element B are mixed, for example. An example of the lithium compound is Li₂CO₃, LiOH, Li₂O₂, Li₂O, LiNO₃, LiNO₂, Li₂SO₄, LiOH·H₂O, LiH, LiF, or the like. The composite oxide and the lithium compound are preferably mixed at a ratio so that a mole ratio between: a total amount of metal elements excluding Li; and Li is, for example, greater than or equal to 1:0.98 and less than or equal to 1:1.12.

An example of the compound containing the element A is Ca(OH)₂, CaO, CaCO₃, CaSO₄, Ca(NO₃)₂, Sr(OH)₂, Sr(OH)₂·8H₂O, Sr(OH)₂·H₂O, SrO, SrCO₃, SrSO₄, or Sr(NO₃)₂. To reduce a moisture amount generated during firing, the compound may be used after drying and dehydration. These compounds may be subjected to crushing or the like to have a particle diameter of greater than or equal to 0.1 µm and less than or equal to 20 µm. Examples of the compound containing the element B similarly include hydroxides, oxides, carbonate salts, sulfate salts, and nitrate salts of the element B. To reduce a moisture amount generated during firing, the compound may be used after drying and dehydration. These compounds may be subjected to crushing or the like to have a particle diameter of greater than or equal to 0.1 µm and less than or equal to 20 µm.

The composite oxide and the compound containing the element A are preferably mixed at a ratio so that a mole ratio between: a total amount of metal elements excluding Li in the composite oxide; and the element A is, for example, greater than or equal to 1:0.0005 and less than or equal to 1:0.03. When more than one compound containing the element A is used, the compounds are mixed so that the total amount of the element A included in the compounds satisfies the above ratio. A preferable mixing ratio of the compound containing the element B to the composite oxide is also the mixing ratio described above. The elements A and B are preferably mixed according to the stoichiometric ratio of A_{α}B_{β}O_{γ}.

The step of firing the mixture in the third step is a multi-stage firing step at least including, for example: a first firing step of firing the mixture under an oxygen flow at greater than or equal to 450°C and less than or equal to 680°C; and a second firing step of firing the fired product obtained in the first firing step under an oxygen flow at a temperature of greater than 680°C. In the first firing step, the temperature is raised at a first temperature-raising rate, which is greater than or equal to 0.2°C/min and less than or equal to 5.5°C/min, to a first set temperature of less than or equal to 680°C. In the second firing step, the temperature is raised at a second temperature-raising rate, which is greater than or equal to 0. 1°C/min and less than or equal to 3.5°C/min and which is smaller than the first temperature-raising rate, to a second set temperature of less than or equal to 900°C. Each of the first and second temperature-raising rates may be set by more than one within the above ranges per a predetermined temperature region.

A holding time at the first set temperature in the first firing step is preferably less than or equal to 5 hours, and more preferably less than or equal to 3 hours. The holding time at the first set temperature refers to a time of keeping the first set temperature after the temperature reaches the first set temperature, and the holding time may be zero. A holding time at the second set temperature in the second firing step is preferably greater than or equal to 1 hour and less than or equal to 10 hours, and more preferably greater than or equal to 1 hour and less than or equal to 5 hours. The holding time at the second set temperature refers to a time of keeping the second set temperature after the temperature reaches the second set temperature. The firing of the mixture is performed in an oxygen flow with an oxygen concentration of, for example, greater than or equal to 60%, and performed with a flow rate of the oxygen flow of greater than or equal to 0.2 mL/min and less than or equal to 4 mL/min per 10 cm³ of the firing furnace, and greater than or equal to 0.3 L/min per kilogram of the mixture.

In the fourth step, the fired product obtained in the third step is washed with water to remove an impurity, and the fired product washed with water is heated and dried. As necessary, the fired product may be crushed, classified, and treated otherwise to regulate D50 of the positive electrode active material within a target range. The fired product washed with water may be dried at a temperature of less than 100°C. An example of a preferable drying temperature is greater than or equal to 150°C and less than or equal to 250°C. The drying treatment may be performed under any of vacuum and atmosphere. An example of the drying treatment time is greater than or equal to 1 hour and less than or equal to 5 hours.

To adhere the compound X to the interface of the primary particles inside the second particles of the composite oxide (Z), both of the compound containing the element A and the compound containing the element B are needed to be added. That is, even if a compound containing both the elements A and B is used, the compound X cannot be present on the surfaces of the primary particles inside the secondary particles. It is considered that the compound X is generated by melting of the element A and subsequent incorporation of the element B into the melt, and if the thermal treatment at a temperature of at least greater than or equal to 600°C is not performed in the presence of the compound containing the element A and the compound containing the element B, the compound X cannot be present on the surfaces of the primary particles inside the secondary particles.

### [Negative Electrode]

The negative electrode 12 comprises a negative electrode core 40 and a negative electrode mixture layer 41 provided on a surface of the negative electrode core 40. For the negative electrode core 40, a foil of a metal stable within a potential range of the negative electrode 12, such as copper or a copper alloy, a film in which such a metal is disposed on a surface layer thereof, or the like may be used. The negative electrode mixture layer 41 includes a negative electrode active material and a binder, and preferably provided on both surfaces of the negative electrode core 40. The negative electrode 12 may be produced by, for example, applying a negative electrode mixture slurry including the negative electrode active material, the binder, and the like on the surfaces of the negative electrode core 40, and drying and subsequently compressing the coating to form the negative electrode mixture layers 41 on both surfaces of the negative electrode core 40. The negative electrode mixture layer 41 may include a conductive agent similar to that in the positive electrode 11.

The negative electrode mixture layer 41 includes, for example, a carbon material that reversibly absorbs and desorbs lithium ions as the negative electrode active material. A preferable example of the carbon material is a graphite such as: a natural graphite such as flake graphite, massive graphite, or amorphous graphite; and an artificial graphite such as massive artificial graphite (MAG) or graphitized mesophase-carbon microbead (MCMB). As the negative electrode active material, an active material including at least one of an element that forms an alloy with Li, such as Si and Sn, and a compound containing such an element may be used. A preferable example of the active material is a silicon material in which Si fine particles are dispersed in a silicon oxide phase or a silicate phase such as lithium silicate. For the negative electrode active material, the carbon material such as graphite and the silicon material are used in combination, for example.

For the binder included in the negative electrode mixture layer 41, a fluororesin, PAN, a polyimide, an acrylic resin, a polyolefin, or the like may be used as in the case of the positive electrode 11, but styrene-butadiene rubber (SBR) is preferably used. The negative electrode mixture layer 41 preferably further includes CMC or a salt thereof, polyacrylic acid (PAA) or a salt thereof, polyvinyl alcohol (PVA), or the like. Among them, SBR; and CMC or a salt thereof, or PAA or a salt thereof are preferably used in combination. The negative electrode mixture layer 41 may include a conductive agent.

### [Separator]

For the separator 13, a porous sheet having an ion permeation property and an insulation property is used. Specific examples of the porous sheet include a microporous thin film, a woven fabric, and a nonwoven fabric. As a material of the separator 13, a polyolefin such as polyethylene, polypropylene, or a copolymer of ethylene and an α-olefin, cellulose, or the like is preferable. The separator 13 may have any of a single layer structure and a stacked structure. On a surface of the separator 13, a heat-resistant layer including inorganic particles, a heat-resistant layer constituted of a highly heat-resistant resin such as an aramid resin, a polyimide, or a polyamide imide, or the like may be formed.

### EXAMPLES

Hereinafter, the present disclosure will be further described with Examples, but the present disclosure is not limited to these Examples.

### <Example 1>

### [Synthesis of Positive Electrode Active Material]

A composite hydroxide obtained by a coprecipitation method and represented by [Ni₉₁Mn₇Al₂](OH)₂ was fired at 500°C for 8 hours to obtain a composite oxide. This composite oxide, lithium hydroxide, calcium hydroxide, and zirconium oxide were mixed so that a mole ratio between: Li; a total amount of Ni, Mn, and Al; Ca; and Zr was 1.05:1.00:0.005:0.005. This mixture was fired under an oxygen flow with an oxygen concentration of 95% (a flow rate of 2 mL/min per 10 cm³ and 5 L/min per kilogram of the mixture) by raising the temperature at a temperature-raising rate of 2.0 °C/min from room temperature to 650°C, and then fired by raising the temperature at a temperature-raising rate of 0.5 °C/min to 750°C. This fired product was washed with water to remove an impurity, and dried in vacuo at 180°C for 2 hours to obtain a positive electrode active material.

The obtained positive electrode active material was measured by an ICP atomic emission spectrometer (iCAP 6300, manufactured by Thermo Fisher Scientific Inc.), and as a result, elements shown in Table 1 and described later were confirmed as elements excluding Li, O, and an impurity element. A compound present in the positive electrode active material was identified by synchrotron X-ray diffraction measurement, and as a result, the presence of CaZrO₃ was confirmed. It was confirmed by TEM-EDX that Ca and Zr were present on an interface between primary particles inside secondary particles.

### [Production of Positive Electrode]

The positive electrode active material, acetylene black, and polyvinylidene fluoride were mixed at a mass ratio of 96:2.5:1.5, and N-methyl-2-pyrrolidone (NMP) was used as a dispersion medium to prepare a positive electrode mixture slurry. Then, the positive electrode mixture slurry was applied on a positive electrode core made of aluminum foil, the coating was dried and compressed, and then the positive electrode core was cut to a predetermined electrode size to obtain a positive electrode in which positive electrode mixture layers were formed on both surfaces of the positive electrode core. An exposed portion where the surface of the positive electrode core was exposed was provided on a part of the positive electrode.

### [Preparation of Non-Aqueous Electrolyte Liquid]

Ethylene carbonate (EC), methyl ethyl carbonate (MEC), and dimethyl carbonate (DMC) were mixed at a volume ratio of 3:3:4 (25°C). Into the mixed solvent, LiPF₆ was dissolved so that the concentration was 1.2 mol/L to prepare a non-aqueous electrolyte liquid.

### [Production of Test Cell]

An aluminum lead was attached to the exposed portion of the positive electrode, and a nickel lead was attached to lithium metal foil as a negative electrode. The positive electrode and the negative electrode were spirally wound via a separator made of a polyolefin, and then press-formed in a radial direction to produce a flat, wound electrode assembly. This electrode assembly was housed in an exterior composed of an aluminum laminate sheet, the non-aqueous electrolyte liquid was injected thereinto, and then an opening of the exterior was sealed to obtain a test cell A1.

### <Example 2>

A test cell A2 was produced in the same manner as in Example 1 except that, in the synthesis of the positive electrode active material, a predetermined amount of strontium hydroxide was added instead of calcium hydroxide. It was confirmed that the synthesized positive electrode active material contained elements shown in Table 1. It was also confirmed that SrZrOs was present in the positive electrode active material and that Sr and Zr were present on an interface between primary particles inside secondary particles.

### <Example 3>

A test cell A3 was produced in the same manner as in Example 1 except that, in the synthesis of the positive electrode active material, predetermined amounts of strontium hydroxide and titanium hydroxide were added instead of calcium hydroxide and zirconium oxide. It was confirmed that the synthesized positive electrode active material contained elements shown in Table 1. It was also confirmed that Sr₂TiO₄ and SrTiO₃ were present in the positive electrode active material and that Sr and Ti were present on an interface between primary particles inside secondary particles.

### <Comparative Example 1>

A test cell B1 was produced in the same manner as in Example 1 except that, in the synthesis of the positive electrode active material, calcium hydroxide and zirconium oxide were not added.

### <Example 4>

A test cell A4 was produced in the same manner as in Example 1 except that, in synthesis of the positive electrode active material: a composite hydroxide represented by [Ni₈₆Mn₁₄](OH)₂ was used, and a composite oxide obtained by firing this composite hydroxide, lithium hydroxide, calcium hydroxide, and tungsten oxide were mixed so that a mole ratio between: Li; a total amount of Ni and Mn; Ca; and W was 1.03:1.00:0.005:0.005; this mixture was fired under an oxygen flow with an oxygen concentration of 95% (a flow rate of 2 mL/min per 10 cm³ and 5 L/min per kilogram of the mixture) by raising the temperature at a temperature-raising rate of 2.0 °C/min from room temperature to 670°C, and then fired by raising the temperature at a temperature-raising rate of 0.5 °C/min to 780°C; and this fired product was washed with water to remove an impurity, and dried in vacuo at 180°C for 2 hours to obtain a positive electrode active material.

It was confirmed that the positive electrode active material synthesized in Example 4 contained elements shown in Table 1. It was also confirmed that CaWO₄ was present in the positive electrode active material and that Ca and W were present on an interface between primary particles inside secondary particles.

### <Example 5>

A test cell A5 was produced in the same manner as in Example 4 except that, in the synthesis of the positive electrode active material, predetermined amounts of strontium hydroxide and molybdenum oxide were added instead of calcium hydroxide and tungsten oxide. It was confirmed that the synthesized positive electrode active material contained elements shown in Table 1. It was also confirmed that SrMoO₄ was present in the positive electrode active material and that Sr and Mo were present on an interface between primary particles inside secondary particles.

### <Example 6>

A test cell A6 was produced in the same manner as in Example 5 except that, in the synthesis of the positive electrode active material, predetermined amounts of calcium hydroxide and titanium hydroxide were added instead of strontium hydroxide and molybdenum oxide. It was confirmed that the synthesized positive electrode active material contained elements shown in Table 1. It was also confirmed that CaTiO₃ was present in the positive electrode active material and that Ca and Ti were present on an interface between primary particles inside secondary particles.

### <Comparative Example 2>

A test cell B2 was produced in the same manner as in Example 4 except that, in the synthesis of the positive electrode active material, calcium hydroxide and tungsten oxide were not added.

### <Comparative Example 3>

A test cell B3 was produced in the same manner as in Example 4 except that, in the synthesis of the positive electrode active material, tungsten oxide was not added.

### <Comparative Example 4>

A test cell B4 was produced in the same manner as in Example 4 except that, in the synthesis of the positive electrode active material, the timing of adding tungsten oxide was changed to timing after washing the fired product with water, and the drying after water washing was performed under conditions of atmospheric pressure at 80°C. It was confirmed that CaWO₄ was present only on surfaces of secondary particles in the synthesized positive electrode active material, and absent on an interface of primary particles inside the secondary particles.

### <Comparative Example 5>

A test cell B5 was produced in the same manner as in Example 4 except that, in the synthesis of the positive electrode active material, a predetermined amount of magnesium hydroxide was added instead of strontium hydroxide and molybdenum oxide.

### <Example 7>

A test cell A7 was produced in the same manner as in Example 1 except that: a composite hydroxide obtained by a coprecipitation method and represented by [Ni₇₉Mn₁₉Al₁Co₁](OH)₂ was fired at 500°C for 8 hours to obtain a composite oxide; this composite oxide, lithium hydroxide, calcium hydroxide, and tungsten oxide were mixed so that a mole ratio between: Li; a total amount of Ni, Mn, Al, and Co; Ca; and W was 1.03:1.00:0.01:0.01; this mixture was fired under an oxygen flow with an oxygen concentration of 95% (a flow rate of 2 mL/min per 10 cm³ and 5 L/min per kilogram of the mixture) by raising the temperature at a temperature-raising rate of 2.0 °C/min from room temperature to 650°C, and then fired by raising the temperature at a temperature-raising rate of 0.5 °C/min to 800°C; and this fired product was washed with water to remove an impurity, and dried in vacuo at 180°C for 2 hours to obtain a positive electrode active material.

It was confirmed that the positive electrode active material synthesized in Example 7 contained elements shown in Table 1. It was also confirmed that CaWO₄ was present in the positive electrode active material and that Ca and W were present on an interface between primary particles inside secondary particles.

### <Example 8>

A test cell A8 was produced in the same manner as in Example 7 except that, in the synthesis of the positive electrode active material, a predetermined amount of molybdenum oxide was added instead of tungsten oxide. It was confirmed that the synthesized positive electrode active material contained elements shown in Table 1. It was also confirmed that CaMoO₄ was present in the positive electrode active material and that Ca and Mo were present on an interface between primary particles inside secondary particles.

### <Comparative Example 6>

A test cell B6 was produced in the same manner as in Example 7 except that, in the synthesis of the positive electrode active material, calcium hydroxide and tungsten oxide were not added.

### <Reference Example 1>

A test cell R1 was produced in the same manner as in Example 1 except that: a composite hydroxide obtained by a coprecipitation method and represented by [Ni₈₃Mn₉Al₃Co₅](OH)₂ was fired at 500°C for 8 hours to obtain a composite oxide; this composite oxide, lithium hydroxide, calcium hydroxide, and molybdenum oxide were mixed so that a mole ratio between: Li; a total amount of Ni, Mn, Al, and Co; Ca; and Mo was 1.03:1.00:0.01:0.01; this mixture was fired under an oxygen flow with an oxygen concentration of 95% (a flow rate of 2 mL/min per 10 cm³ and 5 L/min per kilogram of the mixture) by raising the temperature at a temperature-raising rate of 2.0 °C/min from room temperature to 650°C, and then fired by raising the temperature at a temperature-raising rate of 0.5 °C/min to 750°C; and this fired product was washed with water to remove an impurity, and dried in vacuo at 180°C for 2 hours to obtain a positive electrode active material.

It was confirmed that the positive electrode active material synthesized in Reference Example 1 contained elements shown in Table 1. It was also confirmed that CaMoO₄ was present in the positive electrode active material and that Ca and Mo were present on an interface between primary particles inside secondary particles.

### <Reference Example 2>

A test cell R2 was produced in the same manner as in Reference Example 1 except that, in the synthesis of the positive electrode active material, calcium hydroxide and molybdenum oxide were not added.

### <Reference Example 3>

A test cell R3 was produced in the same manner as in Example 1 except that: a composite hydroxide obtained by a coprecipitation method and represented by [Ni₈₀Mn₁₀Co₁₀](OH)₂ was fired at 500°C for 8 hours to obtain a composite oxide; this composite oxide, lithium hydroxide, strontium hydroxide, and titanium hydroxide were mixed so that a mole ratio between: Li; a total amount of Ni, Mn, and Co; Sr; and Ti was 1.03:1.00:0.01:0.01; this mixture was fired under an oxygen flow with an oxygen concentration of 95% (a flow rate of 2 mL/min per 10 cm³ and 5 L/min per kilogram of the mixture) by raising the temperature at a temperature-raising rate of 2.0 °C/min from room temperature to 650°C, and then fired by raising the temperature at a temperature-raising rate of 0.5 °C/min to 780°C; and this fired product was washed with water to remove an impurity, and dried in vacuo at 180°C for 2 hours to obtain a positive electrode active material.

It was confirmed that the positive electrode active material synthesized in Reference Example 3 contained elements shown in Table 1. It was also confirmed that Sr₂TiO₄ and SrTiO₃ were present in the positive electrode active material and that Sr and Ti were present on an interface between primary particles inside secondary particles.

### <Reference Example 4>

A test cell R4 was produced in the same manner as in Reference Example 3 except that, in the synthesis of the positive electrode active material, strontium hydroxide and titanium hydroxide were not added.

### [Measurement of Reaction Resistance (25°C)]

Under a temperature environment of 25°C, repeated twice were: a procedure A of charging the test cell at a constant current of 0.2 It until a battery voltage reached 4.3 V, 4.4 V or 4.5 V, and charging the test cell at a constant voltage of 4.3 V, 4.4 V, or 4.5 V until a current value reached 1/100 It; and a procedure B of discharging the test cell at a constant current of 0.2 It until the battery voltage reached 2.5 V. Thereafter, each battery subjected to the procedure A again was subjected to an alternating-current impedance measurement under conditions of temperature: 25°C, frequency: 0.01 Hz to 100000 Hz, and applied voltage: 10 mV to determine a reaction resistance Rct (Ω) at 25°C with equivalent-circuit fitting of Nyquist plot.

Tables 1 to 4 show the calculated reaction resistance Rct. Rct shown in Table 1 are values relative to Rct of the test cell B1 of Comparative Example 1 being 100. Rct shown in Table 2 are values relative to Rct of the test cell B2 of Comparative Example 2 being 100. Rct shown in Table 3 are values relative to Rct of the test cell B6 of Comparative Example 6 being 100. Rct of the test cell R2 of Reference Example 2 in Table 4 is a value relative to Rct of the test cell R1 of Reference Example 1 being 100. Rct of the test cell R4 of Reference Example 4 in Table 4 is a value relative to Rct of the test cell R3 of Reference Example 3 being 100.

**[Table 1]**

| | Positive electrode active material constituent element (mol%) | | | | | | A*_{α}*B*_{β}*O*_{γ}* | Rct |
|---|---|---|---|---|---|---|---|---|
| | Ni | Mn | Al | Co | M | Ca/Sr | | |
| A1 | 90 | 7 | 2 | 0 | Zr0.5 | Ca0.5 | CaZrO₃ | 23 |
| A2 | 90.4 | 7 | 2 | 0 | Zr0.5 | Sr0.1 | SrZrO₃ | 30 |
| A3 | 90.2 | 7 | 2 | 0 | Ti0.5 | Sr0.3 | Sr₂TiO₄, SrTiO₃ | 27 |
| B1 | 91 | 7 | 2 | 0 | - | - | - | 100 |

**[Table 2]**

| | Positive electrode active material constituent element (mol%) | | | | | | A*_{α}*B*_{β}*O*_{γ}* | Rct |
|---|---|---|---|---|---|---|---|---|
| | Ni | Mn | Al | Co | M | Ca/Sr | | |
| A4 | 85 | 14 | 0 | 0 | WO.5 | Ca0.5 | CaWO₄ | 24 |
| A5 | 84.8 | 14 | 0 | 0 | Mo1 | Sr0.2 | SrMoO₄ | 26 |
| A6 | 84 | 14 | 0 | 0 | Ti1 | Ca1 | CaTiO₃ | 30 |
| B2 | 86 | 14 | 0 | 0 | - | - | - | 100 |
| B3 | 85.5 | 14 | 0 | 0 | - | Ca0.5 | - | 73 |
| B4 | 85 | 14 | 0 | 0 | WO.5 | Ca0.5 | CaWO₄ (only on surfaces of secondary particles) | 56 |
| B5 | 85 | 14 | 0 | 0 | Mg1 | - | - | 101 |

**[Table 3]**

| | Positive electrode active material constituent element (mol%) | | | | | | A_{α}B*_{β}*O*_{γ}* | Rct |
|---|---|---|---|---|---|---|---|---|
| | Ni | Mn | Al | Co | M | Ca/Sr | | |
| A7 | 77 | 19 | 1 | 1 | W1 | Ca1 | CaWO₄ | 38 |
| A8 | 77 | 19 | 1 | 1 | Mo1 | Ca1 | CaMoO₄ | 41 |
| B6 | 79 | 19 | 1 | 1 | - | - | - | 100 |

**[Table 4]**

| | Positive electrode active material constituent element (mol%) | | | | | | A_{α}B*_{β}*O*_{γ}* | Rct |
|---|---|---|---|---|---|---|---|---|
| | Ni | Mn | Al | Co | M | Ca/Sr | | |
| R1 | 81 | 9 | 3 | 5 | Mo1 | Ca1 | CaMoO₄ | 70 |
| R2 | 83 | 9 | 3 | 5 | - | - | - | 100 |
| R3 | 78 | 10 | 0 | 10 | Ti1 | Sr1 | Sr₂TiO₄, SrTiO₃ | 84 |
| R4 | 80 | 10 | 0 | 10 | - | - | - | 100 |

As shown in Tables 1 to 3, all the test cells of Examples have a reduced reaction resistance Rct as compared with the corresponding test cells of Comparative Examples. In the synthesis of the positive electrode active material, the case where either element A (Ca or Sr) or element B (W, Mo, Ti, or Zr) were not added (Comparative Examples 1, 2, and 6), the case where only one of elements A and B was added (Comparative Examples 3 and 5), and the case where A_{α}B_{β}O_{γ} is present only on the surfaces of the secondary particles (Comparative Example 4) fail to exhibit an inhibitory effect on the reaction resistance.

As shown in Table 4, a larger content of Co decreases an inhibitory effect of A_{α}B_{β}O_{γ} on the reaction resistance. That is, the case where the content of Co is small, specifically the case where the content of Co is less than 5 mol% relative to the metal elements excluding Li in the composite oxide, exhibits a remarkable inhibitory effect of A_{α}B_{β}O_{γ} on the reaction resistance.

### REFERENCE SIGNS LIST

10 non-aqueous electrolyte secondary battery, 11 positive electrode, 12 negative electrode, 13 separator, 14 electrode assembly, 16 exterior housing can, 17 sealing assembly, 18, 19 insulating plate, 20 positive electrode lead, 21 negative electrode lead, 22 grooved portion, 23 internal terminal plate, 24 lower vent member, 25 insulating member, 26 upper vent member, 27 cap, 28 gasket, 30 positive electrode core, 31 positive electrode mixture layer, 40 negative electrode core, 41 negative electrode mixture layer

## Claims

1. A positive electrode active material for a non-aqueous electrolyte secondary battery, including a lithium-transition metal composite oxide having a layered structure and represented by the general formula LiₓNiₐMn_{b}Al_{c}Co_{d}MₑO_{2-y}, wherein 0.95<x<1.05, 0.75≤a≤0.95, 0.05≤b≤0.25, 0≤c≤0.02, 0≤d<0.05, 0≤e≤0.03, 0≤y≤0.05, a+b+c=1, and M represents at least one element selected from the group consisting of Fe, Ti, Si, Nb, Mo, W, and Zr, wherein
the lithium-transition metal composite oxide is of secondary particles formed by aggregation of primary particles, and
a compound containing: at least one selected from the group consisting of Ca and Sr; and at least one selected from the group consisting of W, Mo, Ti, and Zr adheres to at least an interface between the primary particles inside the secondary particles.

2. The positive electrode active material for a non-aqueous electrolyte secondary battery according to claim 1, wherein a total amount of Ca and Sr in the compound is less than or equal to 2 mol% relative to a total molar amount of metal elements excluding Li in the lithium-transition metal composite oxide.

3. The positive electrode active material for a non-aqueous electrolyte secondary battery according to claim 1 or 2, wherein the compound is an oxide.

4. The positive electrode active material for a non-aqueous electrolyte secondary battery according to claim 3, wherein a composition of the oxide is represented by the general formula A_{α}B_{β}O_{γ}, wherein 1≤α≤2, 1≤β≤2, 3≤γ≤6, A represents at least one selected from the group consisting of Ca and Sr, and B represents at least one selected from the group consisting of W, Mo, Ti, and Zr.

5. A non-aqueous electrolyte secondary battery, comprising:
a positive electrode including the positive electrode active material according to any one of claims 1 to 4;
a negative electrode; and
a non-aqueous electrolyte.
